Europäisches Patentamt

European Patent Office

Office européen des brevets

(11) Veröffentlichungsnummer: **0 347 649**
**A1**

(12) **EUROPÄISCHE PATENTANMELDUNG**

(21) Anmeldenummer: 89110315.2

(51) Int. Cl.⁴: **G01F 1/58 , G01F 1/60**

(22) Anmeldetag: 07.06.89

(30) Priorität: 21.06.88 DE 3820936

(43) Veröffentlichungstag der Anmeldung:
**27.12.89 Patentblatt 89/52**

(84) Benannte Vertragsstaaten:
**AT DE FR GB IT LU NL**

(71) Anmelder: **INTERATOM Gesellschaft mit beschränkter Haftung**
**Friedrich-Ebert-Strasse**
**D-5060 Bergisch-Gladbach 1(DE)**

(72) Erfinder: **Knaak, Joachim, Dr.**
**Ferdinand-Stucker-Strasse 8**
**D-5060 Bergisch Gladbach 1(DE)**

(74) Vertreter: **Mehl, Ernst, Dipl.-Ing. et al**
**Postfach 22 13 17**
**D-8000 München 22(DE)**

(54) Vorrichtung zur Messung der Strömungsgeschwindigkeit von elektrisch leitenden Flüssigkeiten.

(57) Die bekannte Einrichtung zur Strömungsmessung elektrisch leitender Flüssigkeiten mit einer Primärspule, die durch einen Wechselstrom erregt wird, und zwei stromauf und stromab davon angeordneten Sekundärspulen, in denen Spannungen induziert werden, deren Differenz ein Maß für die Strömungsgeschwindigkeit ist, wird dadurch vereinfacht, daß nur noch zwei Spulen (L1, L2) vorgesehen sind, die wechselweise als Primär- und Sekundärspule geschaltet werden. Infolge kleiner Unterschiede in der Spulengeometrie oder alterungsbedingt auftretende Nullpunktabweichungen bei Ruhen der Strömung können dann temperaturunabhängig abgeglichen werden.

FIG 2

## Vorrichtung zur Messung der Strömungsgeschwindigkeit von elektrisch leitenden Flüssigkeiten

Die vorliegende Erfindung betrifft eine Vorrichtung nach dem Oberbegriff des 1. Anspruchs. Sie ist insbesondere zur Überwachung des Durchflusses des in manchen kerntechnischen Anlagen als Kühlmittel verwendeten Flüssigmetalls (z. B. Natrium) geeignet; eine Herabsetzung dieses Durchflusses aufgrund von Ablagerungen in den flüssigmetallführenden Leitungen oder aufgrund anderer Schäden in der Anlage muß mit Sicherheit erkannt werden, um Folgeschäden in der Anlage, z. B. infolge örtlicher Überhitzung, zu vermeiden. Die erfindungsgemäße Vorrichtung kann aber mit Vorteil auch im Gießereiwesen angewandt werden.

Ein Verfahren, die Strömungsgeschwindigkeit von elektrisch leitenden Flüssigkeiten dadurch zu messen, daß parallel zur Strömung mindestens drei Induktionsspulen angeordnet werden, die auf derselben magnetischen Achse liegen, und wobei die erste und dritte dieser Spulen durch Anlegen einer Wechselspannung in der Weise erregt werden, daß sich ihr magnetischer Einfluß auf die zweite Spule bei Ruhen der Strömung gegenseitig aufhebt, ist aus der US-A-2 435 043 bekannt. Bei diesem Verfahren bewirkt die vorbeifließende elektrisch leitende Flüssigkeit an den Spulen eine Verzerrung der Magnetfelder der ersten und dritten Spule derart, daß dadurch in der zweiten Spule eine Spannung induziert wird, die der Strömungsgeschwindigkeit direkt proportional ist. Eine Abwandlung einer entsprechenden Vorrichtung, mit der zugleich auch die Temperatur und ein etwaiger Blasengehalt der Flüssigkeit gemessen werden können, hat die Anmelderin in der DE-C-21 20 523 beschrieben. Da die erhaltene Differenzspannung zwischen der ersten und dritten Spule abhängig von der Temperatur der zu messenden Flüssigkeit ist, muß der Erzielung eines Absolutwertes der Strömungsgeschwindigkeit ein Abgleich erfolgen.

In der praktischen Ausführung hat sich gezeigt, daß es große Schwierigkeiten bereitet, die erste und dritte Spule tatsächlich völlig gleich herzustellen. Als Ergebnis dieser Ungleichheiten wird auch bei Ruhen der Flüssigkeit bereits ein Differenzsignal erzeugt, das ebenfalls temperaturabhängig ausgeregelt werden muß. Weiterhin zeigt die Erfahrung, daß die Spulen bei längerem Gebrauch in heißer und ggf. auch radioaktiv belasteter Umgebung Alterungserscheinungen zeigen, die ebenfalls geeignet sind, das Meßsignal zu verfälschen. Da in kerntechnischen Anlagen ein Auswechseln der gealterten Spulen sehr aufwendig ist und nur in größeren Zeitabständen durchgeführt werden kann, besteht das Bedürfnis nach einer dauerhaft zuverlässigen Meßvorrichtung.

Aufgabe der vorliegenden Erfindung ist eine Vorrichtung der beschriebenen Art, bei der das durch die Ungleichheit der Spulen hervorgerufene sogenannte Offset-Signal vernachlässigbar klein und temperaturunabhängig wird, diese Temperaturabhängigkeit selbst durch Wahl einer geeigneten Betriebsfrequenz ausgeschaltet und darüber hinaus die zur Auswertung des Meßsignals benötigte Schaltung vereinfacht werden kann.

Die Lösung dieser Aufgabe erfolgt durch die im kennzeichnenden Teil des 1. Anspruchs angegebenen Mittel. Die Verringerung der Spulenanzahl auf zwei stellt bereits ein die Enbaumaße und die Kosten der Vorrichtung günstig beeinflussendes Merkmal dar. Ist die der Strömungsrichtung entgegengerichtete erste Spule als Primärspule geschaltet, so wird in der stromabliegenden zweiten Spule ein entsprechend der Strömungsgeschwindigkeit der Flüssigkeit vergrößertes Signal erzeugt. Wird die Vorrichtung in der Weise umgeschaltet, daß nunmehr die erste Spule als Sekundär-, die zweite Spule jedoch als Primärspule geschaltet ist, wird ein entsprechend verringertes Signal erzeugt. die Differenz dieser beiden Spannungen ist dann ein Maß für die Strömungsgeschwindigkeit, wobei hier jedoch nur eine Koppelinduktivität zwischen beiden Spulen wirksam wird, die unabhängig von der jeweiligen Schaltung gleich groß ist. Das Offset-Signal wird sehr klein und die alterungs- usw. bedingten, sogenannten Drifteinflüsse werden vernachlässigbar. Zwar wird die Vorrichtung einerseits dadurch komplizierter, daß eine Einrichtung vorgesehen werden muß, die für eine periodische Umschaltung zwischen den beiden Spulen sorgt, andererseits jedoch braucht nur noch ein (jetzt temperaturunabhängiger) Abgleich des Nullpunkt-Offsets zu erfolgen.

Ein Ausführungsbeispiel der Erfindung ist in der Zeichnung dargestellt, und zwar zeigt

Figur 1 die Vorrichtung im Längsaxialschnitt und

Figur 2 eine zu ihrem Betrieb geeignete Schaltung.

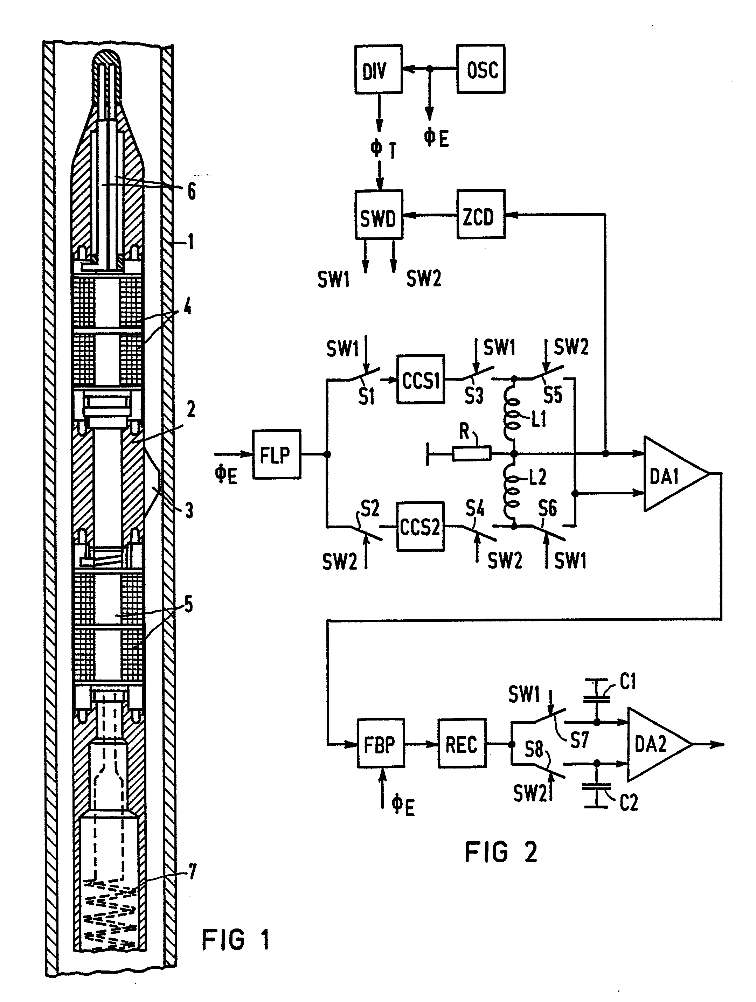

Innerhalb eines Rohres 1, das in die zu überwachende Flüssigkeit eintaucht, ist ein Sondenkörper 2 angeordnet, der mittels über den Umfang verteilter Nocken 3 zentrisch geführt wird. Innerhalb des Sondenkörpers 2 sind eine erste Spule 4 und eine zweite Spule 5 angeordnet, die in der weiter unten beschriebenen Art und Weise miteinander gekoppelt sind. Im Sondenkopf können Thermoelemente 6 angeordnet sein, mit deren Hilfe die jeweilige Temperatur der Flüssigkeit gemessen werden kann. Die Signale der Thermoelemente 6 und der Spulen 4, 5 werden über Leitungen 7 der in der Figur 2 dargestellten Auswerteschaltung zugeführt.

Wie in Fig. 2 dargestellt, wird jede der Spulen L1, L2 über eine eigene Stromquelle CCS1, CCS2 für Wechselstrom konstante Amplitude und vorzugebender Frequenz als Primärspule betrieben, wobei den Stromquellen an ihren Eingängen ein sinusförmiger, aus dem Systemtaktsignal $phi_E$ beispielsweise mittels eines Tiefpasses FLP gewonnenes Signal zugeführt wird. Die wechselweise Umschaltung der Spulen L1, L2 als Primär- oder Sekundärspule, wobei die jeweilige Primärspule an den Ausgang der ihr zugeordneten Stromquelle und die jeweilige Sekundärspule an einen Eingang des Verstärkers DA1 geschaltet wird, erfolgt mit einem System vorzugsweise elektronisch steuerbarer Schalter S1, S2, S3, S4, S5 und S6, die durch Steuersignale SW1, SW2 aus einer Steuereinheit SWD geöffnet und geschlossen werden, wobei die über SW1 gesteuerten Schater S1, S3 und S6 genau dann geschlossen sein sollen, wenn die über SW2 gesteuerten Schalter S2, S4 und S5 offen sind, und umgekehrt.

Der Betrieb der Steuereinheit SWD erfolgt mit einem Taktsignal $phi_T$, dessen Frequenz einem ganzzahligen Bruchteil der Frequenz von $phi_E$ entspricht und das vorzugsweise aus $phi_E$ in einem Frequenzteiler DIV erzeugt wird.

Als Schutzmaßnahme für die Stromquellen CCS1 und CCS2 und den Verstärker DA1 kann ein Nulldurchgangsdetektor ZCD in die Schaltung eingefügt werden, dessen Ausgangssignal der Steuereinheit SWD zugeführt wird und diese nur dann für einen Umschaltvorgang freigibt, wenn der Strom durch die Primärspule L1 oder L2, der dem Spannungsabfall über dem Widerstand R, der in Reihe mit der Primärspule geschaltet ist, unterhalb eines Schwellwertes liegt. Auf diese Weise werden möglicherweise auftretende Selbstinduktionsspannungen auf ein für Stromquellen CCS1, CCS2 und Verstärker DA1 sicheres Maß begrenzt.

Zur Beseitigung eventuell vorhandener Störsignale ist es vorteilhaft, hinter dem Ausgang des Verstärkers DA1 ein Bandpaßfilter FBP, vorzugsweise ein solches, das sich sebsttätig auf die mit dem Taktsignal $phi_E$ zugeführte Frequenz des Spulenstroms als Mittlefrequenz des Durchlaßbereichs einstellt, anzuordnen. Die selbsttätige Nachregelung der Mittenfrequenz vermeidet die Beeinflussung der Meßsignale gemäß der Durchlaßcharakteristik des Filters FBP, die bei einem Filter mit fester Mittenfrequenz bei Schwankungen der Frequenz des Systemtaktsignals $phi_E$ gegeben wäre.

Das - eventuell in FBP gefilterte - Ausgangssignal des Verstärkers DA1 wird einem Gleichrichter REC zugeführt und dort gleichgerichtet. Über die Schalter S7 und S8, betrieben von den Signalen SW1 bzw. SW2, gelangt das Ausgangssignal des Gleichrichters REC zu den als Integratoren, etwa mit Kondensatoren C1, C2, beschalteten Eingängen des Differenzverstärkers DA2, der schließlich als Meßgröße ein Ausgangssignal liefert, das der Differenz der Mittelwerte der in den Spulen L1 bzw L2 durch das Magnetfeld der jeweils anderen Spule erzeugten Induktionsspannungen proportional ist.

## Ansprüche

1. Vorrichtung zur Messung der Strömungsgeschwindigkeit von elektrisch leitenden Flüssigkeiten mittels in Strömungsrichtung hintereinander angeordneten Spulen (4, 5), deren eine als Primärspule mit einem Wechselstrom erregbar und wobei die dadurch in Sekundärspulen induzierte Spannung meßbar ist, **dadurch gekennzeichnet**, daß nur zwei Spulen (4, 5) vorhanden sind, die wechselweise als Primär- und Sekundärspule schaltbar sind.

2. Vorrichtung nach Anspruch 1, **dadurch gekennzeichnet**, daß die Frequenz des Erregerstroms so gewählt wird, daß die zu messenden Induktionsspannungen nahezu unabhängig von der Temperatur der Flüssigkeit sind.

3. Meßanordnung zur Bestimmung einer Spannungsdifferenz für eine Vorrichtung mit zwei Spulen (4, 5) nach Anspruch 1 oder 2, **dadurch gekennzeichnet**, daß die Umschaltung der Spulen (4, 5) periodisch gemäß einer Taktfrequenz ($phi_T$) erfolgt.

4. Meßanordnung gemäß Anspruch 3, **dadurch gekennzeichnet**, daß die Erregerfrequenz ($phi_E$) ein ganzzahliges Vielfaches der Taktfrequenz ($phi_T$) ist.

5. Meßanordnung gemäß einem oder mehrerer der vorhergehenden Ansprüche, **dadurch gekennzeichnet**, daß die Induktionsspannungen der Spulen (4, 5) vor der Differenzbildung in einem einzigen Verstärker (DA1), der über ein Schaltersystem (S1 - S6) den einzelnen Spulen zugeschlatet werden kann, verstärkbar sind.

6. Meßanordnung gemäß Anspruch 5, **dadurch gekennzeichnet**, daß am Ausgang des Verstärkers (DA1) ein Bandpaßfilter (FBP) angeordnet ist.

7. Meßanordnung gemäß Anspruch 6, **dadurch gekennzeichnet**, daß die Mittelfrequenz des Bundpaßfilters selbsttätig auf die Erregerfrequenz abstimmbar ist.

8. Meßanordnung gemäß einem oder mehrerer der vorhergehenden Ansprüche, **dadurch gekennzeichnet**, daß jeder Spule (4, 5) eine eigene, einstellbare Stromquelle (CCS1, CCS2) für Wechselstrom konstanter Amplitude für den Betrieb als Primärdspule zugeordnet ist, wobei alle Stromquellen von einem gemeinsamen Oszillator (OSC) für die Erregerfrequenz betreibbar sind.

88 P 6721

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 987 362 (McCANN)<br>* Spalte 5, Zeilen 29-57; Spalte 6, Zeilen 1-18; Spalte 6, Zeile 57 - Spalte 7, Zeile 43; Figuren 1,2 *<br>--- | 1 | G 01 F 1/58<br>G 01 F 1/60 |
| D,A | US-A-2 435 043 (LEHDE)<br>* Spalte 1, Zeile 50 - Spalte 2, Zeile 28; Figur 1 *<br>--- | 1 | |
| D,A | DE-C-2 120 523 (INTERATOM)<br>* Spalte 6, Zeilen 29-45; Figur 1 *<br>----- | 1 | |
| | | | **RECHERCHIERTE SACHGEBIETE (Int. Cl.4)**<br><br>G 01 F |

Der vorliegende Recherchenbericht wurde für alle Patentansprüche erstellt

| Recherchenort | Abschlußdatum der Recherche | Prüfer |
|---|---|---|
| DEN HAAG | 22-09-1989 | HEINSIUS R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument